Europäisches Patentamt

European Patent Office

Office européen des brevets

(19)

(11) Veröffentlichungsnummer : **0 386 126 B1**

# (12) EUROPÄISCHE PATENTSCHRIFT

(45) Veröffentlichungstag der Patentschrift :
**19.02.92 Patentblatt 92/08**

(51) Int. Cl.$^5$ : **B60K 28/16**

(21) Anmeldenummer : **89900012.9**

(22) Anmeldetag : **08.12.88**

(86) Internationale Anmeldenummer :
**PCT/EP88/01123**

(87) Internationale Veröffentlichungsnummer :
**WO 89/05743 29.06.89 Gazette 89/14**

(54) **ANTRIEBSSCHLUPFREGELSYSTEM.**

(30) Priorität : **22.12.87 DE 3743471**

(43) Veröffentlichungstag der Anmeldung :
**12.09.90 Patentblatt 90/37**

(45) Bekanntmachung des Hinweises auf die
Patenterteilung :
**19.02.92 Patentblatt 92/08**

(84) Benannte Vertragsstaaten :
**DE FR GB IT SE**

(56) Entgegenhaltungen :
**EP-A- 0 174 662**
**EP-A- 0 186 122**
**DE-A- 3 528 536**

(73) Patentinhaber : **ROBERT BOSCH GmbH**
**Postfach 10 60 50**
**W-7000 Stuttgart 10 (DE)**

(72) Erfinder : **SIGL, Alfred**
**Waldeck 8**
**W-7126 Sersheim (DE)**
Erfinder : **SCHMITT, Johannes**
**Posener Strasse 19**
**W-7141 Schwieberdingen (DE)**
Erfinder : **ISELLA, Thomas**
**Blumenstrasse 70**
**W-7145 Markgröningen (DE)**

(74) Vertreter : **Kammer, Arno, Dipl.-Ing.**
**ROBERT BOSCH GmbH Zentralabteilung**
**Patente Postfach 50**
**W-7000 Stuttgart 1 (DE)**

EP 0 386 126 B1

EP 0 386 126 B1

## Beschreibung

### Stand der Technik

Es sind Antriebsschlupfregelsysteme für Fahrzeuge bekannt (z. B aus DE-A1-3528536, bei denen nach Überschreiten einer vorgegebenen Schlupfwelle durch wenigstens ein (meist durch die beiden) angetriebenes Rad das Motormoment reduziert wird und bei denen nach Unterschreiten der Schlupfschwelle das Motormoment z. B. durch Verstellen der Drosselklappe in Stufen erhöht wird, bis wenigstens ein Rad wieder instabil wird. Dieser Ablauf wird mit Regelzyklus bezeichnet, der sich meist mehrfach wiederholt. Bei einem bekannten System werden die Höhe der Zugabestufen innerhalb der einzelnen Regelzyklen permanent vergrößert, sodaß ein progressiver Verlauf der Zunahme des Motormoments erzielt wird.

### Vorteile der Erfindung

Die Erfindung geht gegenüber dem Stand der Technik einen anderen Weg, in dem sie die Zugabestufen in ihrer Höhe konstant hält, dafür die Haltezeiten variiert und diese Variation von verschiedenen Bedingungen, nämlich der Schlupfgröße, der Fahrzeugbeschleunigung und/oder der Anzahl der schon aufgetretenen Regelzyklen in einer Regelung abhängig macht. Die Berechnung der Haltezeit wird in jedem Rechendurchlauf durchgeführt, d. h. diese wird. ständig an die neuen Gegebenheiten von Fahrbahn und Fahrzeug angepaßt.

So werden bei hohem Antriebsschlupf nahe der zulässigen Schlupfgrenze an der Antriebsachse die Haltezeiten verlängert, da der optimale Schlupf bald erreicht wird bzw. ein Durchdrehen (Instabilität) der Antriebsräder kurz bevorsteht. Bei hoher Fahrzeugbeschleunigung verkürzen sich die Haltezeiten (Indiz für hohen Reibwert), da hier wesentlich mehr Moment übertragen werden kann.

Hohe Fahrzeugbeschleunigungen sind ein Indiz für hohen Reibwert, daher kann dann sehr schnell zugegeben werden, ohne ein Durchdrehen der Antriebsräder zu befürchten. Niedrige Fahrzeugbeschleunigung hat ihre Ursache entweder in niedrigem Reibwert oder in niedrigem Motormoment.

Ist das Motormoment zu niedrig, dann ist der Antriebsschlupf sehr klein (nahe 0 Km/h) und es wird in diesem Falle schnell zugegeben. Dies wirkt sich bei Wechsel des Reibbeiwertes oder an Kurvenausgang durch bessere Traktion positiv aus.

Die Berücksichtung der schon in einer Regelung aufgetretenen Regelzyklen bewirkt, daß im Verlauf einer Regelung ein feindosiertes, vorsichtiges Herantasten an den Optimalwert des Motormoments erreicht wird, sodaß Regelschwingungen schneller abklingen und ein Ruckeln vermieden wird. Tritt in diesen Zustand über längere Zeit kein wesentlicher Schlupf mehr an den Antriebsrädern auf (z.B. bei μ-Wechsel), so kann die Anzahl der bereits aufgetretenen Regelzyklen für die weitere Berechnung ignoriert werden.

Die Fahrzeug-Beschleunigung kann einerseits analog in die Haltezeitberechnung eingehen, andererseits kann die Haltezeit jeweilig bei Überschreiten von diskreten Beschleunigungsschwellen stufenweise verändert werden. Diese diskreten Beschleunigungsschwellen können fahrgeschwindigkeitsabhängig gemacht werden (bei hoher Fahrzuggeschwindigkeit werden kleinere Beschleunigungen erreicht). Auch ist es möglich, erst ab einer vorgegebenen Schwelle der Fahrzeugbeschleunigung die Änderung der Haltezeit vorzunehmen. Auch diese Schwelle kann von der Geschwindigkeit des Fahrzeugs abhängig gemacht werden.

### Figurenbeschreibung

Anhand der Zeichnung soll ein Ausführugsbeispiel der Erfindung erläutert werden.
Es zeigen
Fig. 1 ein Blockschaltbild eines erfindugsgemäßen Antriebsschlupfreglers
Fig. 2 ein möglicher Verlauf des geregelten Motormoments

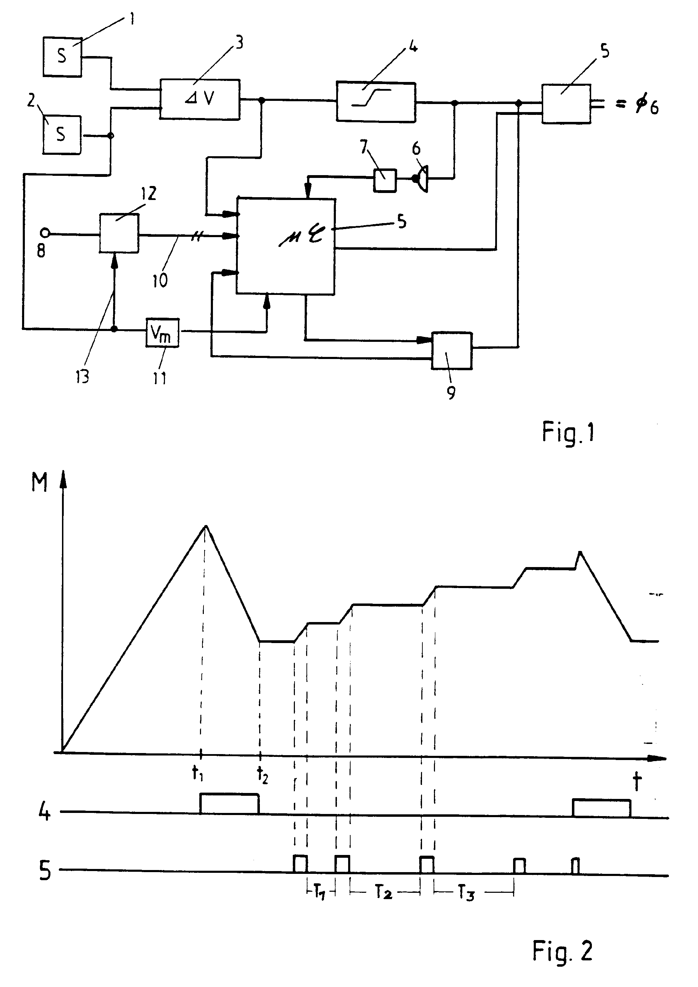

In Fig. 1 wird der Einfachheit halber ein Antriebsschlupfregler gezeigt, der nur das Motormoment beeinflußt und zwar schon bei Instabilität an einem der Räder. Es ist nur ein Sensor eines angetriebenen Rads gezeigt. Die Erfindung kann jedoch auch bei Antriebsschlupfreglern mit Betätigung der Bremse und Beeinflussung des Motormoments, letzteres z. B. wenn alle angetriebenen Räder instabil werden, Anwendung finden.

In Fig. 1 sind ein Sensor 1 eines angetriebenen Rads und ein Sensor 2 eines nicht angetriebenen Rads vorgesehen. In einem Block 3 wird die Differenz $\Delta V$ der beiden Radgeschwindigkeiten gebildet. Übersteigt diese Differenz (entspricht Radschlupf) eine in Vergleicher 4 vorgegebene positive Schwelle (Antriebsschlupf), so wird über ein motorisches Stellglied 5 die Drosselklappe 6 verstellt und das Motormoment erniedrigt (siehe Zeitraum $t_1$ bis $t_2$ in Fig. 2). Die Einwirkungsmöglichkeit des Fahrpedals auf das Stellglied bzw. die Drosselklappe ist hier nicht gezeigt. Diese Einwirkungsmöglichkeit ist während der Regelug unterbrochen.

Das Verschwinden des Ausgangssignals des Vergleichers 4 aktiviert über einen Inverter 6 und einen Dif-

2

ferenzierer 7 einen Rechner 5, der die nachfolgende Motormomentenerhöhung steuert. Diesem wird das Ausgangssignal des Blocks 3 ($\Delta$V), die Fahrzeugbeschleunigung a einer Klemme 8, ein Zählergebnis eines Zählers 9 und ein Signal eines Vergleichers 11 zugeführt. Die Fahrzeuglängsbeschleunigung a ist über ein Glied 12 mit mehreren unterschiedlichen Schwellen geführt.

Über eine Mehrfachleitung 10 wird dem Rechner 5 mitgeteilt, welche Schwelle gerade überschritten ist. Die Schwellen können noch von der Fahrzeuggeschwindigkeit (Geschwindigkeit des nicht angetriebenen Rads) beeinflußt werden und zwar so, daß die Schwellen mit steigender Geschwindigkeit erniedrigt werden. (Ltg. 13)

Der Zähler 9 ermittelt die Zahl der in einer Regelung bereits aufgetretenen Regelzyklen durch Zählen der Absenksignale am Ausgang des Vergleichers 4. Er wird durch ein Ausgangssignal des Rechners 5 rückgestellt, wenn z.B. über eine gewisse Zeit nur ein kleines $\Delta$V vorliegt, oder eine Regelung beendet wurde.

Mit Hilfe der ihm zugeführten Signale errechnet der Rechner 5 laufend die zwischen zwei aufeinanderfolgenden, gleich breiten Zugabesignalen (siehe Zeile 5 in Fig. 2) einzuschiebende Haltezeit ($T_1$, $T_2$, $T_3$ ... in Zeile 5).

Die Berechnung kann z. B. nach der folgenden oder einer vergleichbaren Beziehung erfolgen:

$$t_H = \frac{K_1 \cdot \Delta V}{a*} + \frac{K_2 \cdot n}{a*}$$

wobei

$t_H$ die Haltezeit,

$K_1$, $K_2$ konstante Faktoren,

$\Delta V$ = (VAN - VNA) = die Differenz der angetriebenen zur nichtangetriebenen Achsgeschwindigkeit,

n die Zahl der bereits in der Regelung aufgetretenen Regelzyklen (wobei n=1 wird, wenn $\Delta$V über eine bestimmte Zeit klein ist) und

a* ein der gerade gültige Fahrzeugbeschleunigung entsprechendes Signal ist.

Die gewünschten Auswirkungen der Größen $\Delta$V, a* und n wurden bereits oben erläutert. Die stufenweise Momentenerhöhung endet, wenn bei erneuter Instabilität ein Signal am Ausgang des Vergleichers 4 auftritt und der Rechner 5 wieder deaktiviert wird.

Kommt bei einem Fahrzeugstart das Fahrzeug (z. B. am Berg und niedrigen $\mu$) nicht von der Stelle, so wird dies über einen Vergleicher 11 mit sehr kleinem Vergleichswert dem Rechner 5 mitgeteilt, der dann die Höhe der Zugabestufen (also die Impulsbreite der Pulse der Zeile 5 der Fig. 2) verkleinert, z. B. halbiert und dadurch bei einem langsamer steigenden und damit feindosierten Motormoment eine verbesserte Anfahrhilfe bietet.

## Patentansprüche

1. Antriebsschlupfregelsystem für Fahrzeuge, bei dem nach Überschreiten einer Antriebsschlupfschwelle durch weigstens ein angetreibenes Rad das Motormoment reduziert und nach Unterschreiten der Antriebsschlupfschwelle in Stufen wieder erhöht wird, dadurch gekennzeichnet, daß die Stufenhöhe konstant ist und daß die dazwischenliegenden Haltezeiten von der Größe des augenblicklichen Antriebsschlupfs und/oder von der augenblicklichen Fahrzeugbeschleunigung und/oder von der Zahl der vorher erfolgten sufenweisen Erhöhung (=Regelzyklen) abhängig sind derart, daß die Haltezeiten mit steigendem Schlupf zunehmen bzw. mit steigender Fahrzeugbeschleunigung abnehmen bzw. mit steigender Zahl der Regelzyklen verlängert werden und bei geringen Schlupfwerten über gewisse Zeiträume wieder verkürzt werden.

2. Antriebsschlupfregelsystem nach Anspruch 1, dadurch gekennzeichnet, daß die Haltezeiten ab Erreichen einer vorgegebenen Schwelle der Fahrzeugbeschleunigung verkürzt werden.

3. Antriebsschlupfregelsystem nach Ansprüchen 1 oder 2, dadurch gekennzeichnet, daß die Verkürzung in Stufen bei Überschreiten von Beschleunigungsschwelllen erfolgt.

4. Antriebsschlupfregelsystem nach einem der Ansprüche 1 bis 3, dadurch gekennzeichnet, daß die Haltezeiten zusätzlich von der Fahrzeuggeschwindigkeit abhängig sind derart, daß mit größer werdender Fahrzeuggeschwindigkeit die haltezeiten verkürzt werden.

5. Antriebsschlupfregelsystem nach Anspruch 3 und 4, dadurch gekennzeichnet, daß mit größer werdender Fahrzeuggeschwindigkeit die Beschleunigungsschwellen erniedrigt werden.

6. Antriebsschlupfregelsystem nach einem der Ansprüche 1 bis 5, dadurch gekennzeichnet, daß die Stufenhöhe erniedrigt wird, solange die Fahrzeuggeschwindigkeit einen vorgegebenen kleinen Geschwindigkeitswert nicht erreicht hat.

## Claims

1. Drive-slip regulating system for motor vehicles, in which the engine torque is reduced after a drive slip threshold has been exceeded by at least one driven wheel and increased again in steps after the drive slip threshold has been undershot, characterised in that the step height is constant and in that the intervening holding times are dependent on the magnitude of the instantaneous drive slip and/or on the instantaneous vehicle acceleration and/or on the number of the previously effected stepwise increase (= regulating cycles) in such a way that the holding times increase with increasing slip or decrease with increasing vehicle acceleration or are lengthened with an increase in the number of regulating cycles and shortened again in the case of small slip values over certain periods of time.

2. Drive-slip regulating system according to Claim 1, characterised in that the holding times are shortened from the time when a predetermined threshold of the vehicle acceleration is reached.

3. Drive-slip regulating system according to Claims 1 or 2, characterised in that shortening is effected in steps when acceleration thresholds are exceeded.

4. Drive-slip regulating system according to one of Claims 1 to 3, characterised in that the holding times are additionally dependent on the vehicle speed, in such a way that the holding times are shortened with increasing vehicle speed.

5. Drive-slip regulating system according to Claim 3 and 4, characterised in that the acceleration thresholds are lowered with increasing vehicle speed.

6. Drive-slip regulating system according to one of Claims 1 to 5, characterised in that the step height is lowered for as long as the vehicle speed has not reached a predetermined, small speed value.

## Revendications

1. Système régulateur du glissement de l'entraînement pour véhicule, selon lequel en cas de dépassement vers le haut d'un seuil de glissement d'entraînement par au moins une roue motrice, on réduit le couple moteur et en ce qu'après dépassement vers le bas du seuil de glissement d'entraînement, on augmente de nouveau le couple moteur par échelons, système caractérisé en ce que la hauteur des échelons est constante et les temps d'attente intermédiaire dépendent de l'amplitude du glissement d'entraînement instantané et/ou de l'accélération instantanée du véhicule et/ou du nombre des augmentations par échelons effectuées précédemment (= cycles de régulation) de façon que les temps d'attente augmentent avec le glissement ou diminuent avec l'augmentation de l'accélération du véhicule ou soient prolongés en fonction du nombre croissant des cycles de régulation et soient de nouveau raccourcis pour de faibles valeurs de glissement pendant certains intervalles de temps.

2. Système régulateur de glissement de l'entraînement selon la revendication 1, caractérisé en ce qu'on raccourci les temps d'attente après avoir atteint un seuil prédéterminé de l'accélération du véhicule.

3. Système régulateur de glissement d'entraînement selon la revendication 1 ou 2, caractérisé en ce que le raccourcissement se fait par échelons lors du dépassement des seuils d'accélération.

4. Système régulateur de glissement de l'entraînement selon l'une des revendications 1 à 4, caractérisé en ce que les temps d'attente sont en outre dépendants de la vitesse du véhicule de façon que ces temps d'attente soient raccourcis à mesure que la vitesse du véhicule augmente.

5. Système régulateur de glissement à l'entraînement selon les revendications 3 et 4, caractérisé en ce qu'on abaisse les seuils d'accélération à mesure que la vitesse du véhicule augmente.

6. Système régulateur de glissement à l'entraînement selon l'une des revendications 1-5, caractérisé en ce qu'on abaisse la hauteur des échelons aussi longtemps que la vitesse du véhicule n'a pas atteint une faible valeur de vitesse, prédéterminée.

Fig.1

Fig. 2